# EUROPÄISCHE PATENTSCHRIFT

(11) **EP 4 251 449 B1**
(45) Veröffentlichungstag und Bekanntmachung des Hinweises auf die Patenterteilung: **01.04.2026**
(21) Anmeldenummer: 21815357.5
(22) Anmeldetag: 24.11.2021
(51) Int. Cl.: B60K 6/365, B60K 6/445, B60K 6/387, B60K 6/547

(54) **ANTRIEBSSTRANG FÜR EIN KRAFTFAHRZEUG**
POWERTRAIN FOR A MOTOR VEHICLE
GROUPE MOTOPROPULSEUR POUR UN VÉHICULE AUTOMOBILE

(30) Priorität: 26.11.2020 AT 510312020
(43) Veröffentlichungstag der Anmeldung: 04.10.2023
(73) Patentinhaber: AVL List GmbH, 8020 Graz (AT)
(72) Erfinder: Wiener, Herbert, 3250 Wieselburg (AT); Schörghuber, Christoph, 3352 St. Peter/Au (AT); Hummer, Oliver, 1060 Wien (AT)
(74) Vertreter: Babeluk Patentanwälte GmbH
(86) Internationale Anmeldenummer: PCT/AT2021/060445
(87) Internationale Veröffentlichungsnummer: WO 2022/109644

(56) Entgegenhaltungen:
- EP-A2- 1 247 679
- WO-A1-2007/110721
- WO-A1-2009/024162
- WO-A1-2011/010182

## Beschreibung

Die Erfindung betrifft einen Antriebsstrang für ein Kraftfahrzeug, mit
- einer Brennkraftmaschine,
- einer ersten elektrische Maschine,
- einer zweiten elektrische Maschine,
- einer Getriebeeinheit mit
   - einer mit der Brennkraftmaschine drehverbindbaren oder drehverbundenen Getriebeeingangswelle,
   - nur einem Planetengetriebe mit den Getriebeelementen Sonnenrad, Hohlrad und Planetenträger, wobei der Planetenträger Planetenräder trägt, die mit dem Sonnenrad und dem Hohlrad kämmen,
   - einem Stufengetriebe mit einer ersten Zwischenwelle, einer zweiten Zwischenwelle und einer Getriebeausgangswelle.

   - wobei auf den Zwischenwellen des Stufengetriebes und/oder der Getriebeausgangswelle miteinander kämmende Losräder und Festräder derart angeordnet sind, dass sie mindestens zwei Gänge, vorzugsweise mindestens drei Gänge mit unterschiedlichen Drehzahlübersetzungen bilden,
   - die Getriebeeingangswelle mit einem ersten Getriebeelement des Planetengetriebes drehverbunden oder drehverbindbar ist,
   - ein drittes Getriebeelement des Planetengetriebes mit der ersten Zwischenwelle des Stufengetriebes, über die der zweite Gang des Stufengetriebes geschaltet wird, drehverbunden oder drehverbindbar ist,
   - das zweite Getriebeelement des Planetengetriebes über ein erstes Bremselement mit dem Gehäuse feststellbar ist,
   - die zweite elektrische Maschine mit der Getriebeausgangswelle drehverbunden oder - vorzugsweise über ein schaltbares Getriebe - drehverbindbar ist,

Die WO 2019/191797 A1 beschreibt eine Getriebeanordnung für ein Hybridfahrzeug mit einem ersten Planetengetriebe und einem zweiten Planetengetriebe, wobei die Getriebeeingangswelle mit einem ersten Planetenträger verbunden ist und das erste Hohlrad und das zweite Hohlrad permanent miteinander verbunden sind. Eine erste elektrische Maschine ist permanent mit dem Sonnenrad des ersten Planetengetriebes und eine zweite elektrische Maschine in zumindest einem Betriebsmodus mit dem Sonnenrad des zweiten Planetengetriebes antriebsverbunden. Das erste Sonnenrad ist über ein Schaltelement mit dem Gehäuse verbindbar. Der zweite Planetenträger des zweiten Planetengetriebes ist fest mit dem Gehäuse verbunden und die zweite elektrische Maschine mit dem zweiten Sonnenrad verbunden oder verbindbar.

Aus der DE 10 2013 113 344 A1 ist ein Leistungsübertragungssystem für ein Hybrid-Elektrofahrzeug mit einem ersten und einem zweiten Planetengetriebe bekannt, von denen einer als Minusgetriebe und der andere als Plusgetriebe ausgebildet ist. Dabei sind eine erste elektrische Maschine und eine zweite elektrische Maschine koaxial zur Getriebeeingangswelle angeordnet, wobei die erste elektrische Maschine fest mit dem Sonnenrad des ersten Planetengetriebes und die zweite elektrische Maschine fest mit dem Sonnenrad des zweiten Planetengetriebes verbunden ist. Die Planetenträger der beiden Planetengetriebesätze sind über eine Reibungskupplung miteinander drehverbindbar. Das Sonnenrad des ersten Planetengetriebes kann über eine erste Reibungsbremse, und der Planetenträger des zweiten Planetengetriebes über eine zweite Reibungsbremse festgehalten werden.

Die DE 10 2013 226 472 A1 beschreibt ein Kraftübertragungssystem für ein Hybridfahrzeug mit einem ersten Planetenradsatz und einem zweiten Planetenradsatz. Der Planetenträger des ersten Planetenradsatzes ist mit der Abtriebswelle einer Brennkraftmaschine verbunden. Die Hohlräder der beiden Planetenradsätze sind miteinander verbunden und wirken auf eine Antriebseinheit ein. Der Planetenträger des zweiten Planetenradsatzes ist über eine Bremse festhaltbar. Der Planetenträger des ersten Planetenradsatzes ist über eine Kupplung mit den Hohlrädern verbindbar. Weiters ist das Sonnenrad des ersten Planetenradsatzes mit einer ersten elektrischen Maschine und das Sonnenrad des zweiten Planetenradsatzes mit einer zweiten elektrischen Maschine verbunden.

Die WO 2009/024162 A1 beschreibt ein Hybridantriebssystem mit einer Brennkraftmaschine und zwei Elektromotoren, mit einem Planetengetriebe und zwei Teilgetrieben, wobei jedes Teilgetriebe mehrere schaltbare Getriebestufen mit jeweils einem Festrad und einem Losrad aufweist. Die Festräder des ersten Teilgetriebes sind über eine erste Eingangswelle mit dem Sonnenrad und die Festräder des zweiten Teilgetriebes über eine zweite Eingangswelle mit dem Hohlrad des Planetengetriebes verbunden. Die Losräder sind über Schalteinheiten mit einer Abtriebswelle verbindbar, die über eine Zahnradstufe auf eine Ausgangswelle einwirkt, von dem Leistung abgenommen werden kann. Die Eingangswellen und die Ausgangswelle sind voneinander beabstandet.

Im rein elektrischen Betrieb erfolgt beim Stand der Technik der Antrieb über eine relativ große Zahl an Zahneingriffen, was sich nachteilig auf den Wirkungsgrad auswirkt.

Aufgabe der Erfindung ist es, eine kompakte Antriebsstranganordnung mit hohem Wirkungsgrad bereitzustellen.

Erfindungsgemäß erfolgt die Lösung der genannten Aufgabe dadurch, dass
- über die erste Zwischenwelle des Stufengetriebes auch der erste Gang, vorzugsweise auch der dritte Gang, des Stufengetriebes geschaltet werden,
- die erste elektrische Maschine mit einem zweiten Getriebeelement des Planetengetriebes drehverbunden oder drehverbindbar ist,
- die Brennkraftmaschine über ein erstes Schaltelement direkt mit der Getriebeausgangswelle drehverbindbar ist, und dass
- das erste Getriebeelement des nur einen Planetengetriebes durch ein zweites Bremselement feststellbar ist, wobei vorzugsweise in einem elektrischen Fahrmodus, bei dem die erste elektrische Maschine und/oder die zweite elektrische Maschine aktiviert ist, das erste Getriebeelement des Planetengetriebes durch das zweite Bremselement blockiert ist.

Durch die erfindungsgemäße Ausführung des Antriebsstrangs, insbesondere dadurch, dass nur ein Planetengetriebe erforderlich ist, weist dieser eine kompakte Bauweise auf.

Um Nebenaggregate auf einfache Weise antreiben zu können ist es vorteilhaft, wenn zumindest eine Zwischenwelle einen Nebenabtrieb aufweist.

Um bei Ausfall beispielsweise der Steuerung für die elektrischen Maschinen eine sogenannte "Motor-Notbetrieb" Funktion zu ermöglichen, ist es besonders vorteilhaft, wenn der Antriebsstrang zumindest eine Notfallschaltung insbesondere für eine Vorwärtsfahrt und eine Rückwärtsfahrt - aufweist. Dies ermöglicht eine Weiterfahrt im Falle einer Störung mit reduzierter Funktionalität.

Vorzugsweise sind die mit der Brennkraftmaschine verbundene Getriebeeingangswelle und die Getriebeausgangswelle achsgleich zueinander angeordnet, wobei die Brennkraftmaschine und die Getriebeausgangswelle an verschiedenen Enden der Getriebeanordnung angeordnet sind.

Eine kompakte Ausführung der Erfindung sieht vor, dass die erste Zwischenwelle achsgleich zu einer Drehachse des nur einen Planetengetriebes angeordnet ist.

Eine kompakter Antriebsstrang mit einer geringen Anzahl an Teilen lässt sich erzielen, wenn die erste Zwischenwelle als Hohlwelle ausgeführt ist, wobei innerhalb der ersten Zwischenwelle ein mit dem ersten Getriebeelement drehverbundene oder drehverbindbare Direkttriebwelle angeordnet ist.

Dabei ist in einer Ausführungsvariante der Erfindung vorgesehen, dass das erste Getriebeelement des nur einen Planetengetriebes und das dritte Getriebeelement miteinander über ein Koppelschaltelement drehfest verbindbar sind. Mit dem Koppelschaltelement können das erste Element und das dritte Element starr miteinander verbunden werden, sodass die beiden Elemente - im Direkttriebmodus - mit derselben Drehzahl umlaufen.

Vorzugsweise ist die zweite elektrische Maschine mit der Getriebeausgangswelle über ein schaltbares Getriebe drehverbindbar.

In einer konstruktiv einfachen und kompakten Ausführung der Erfindung ist vorgesehen, dass das Planetengetriebe als einfache Minusgetriebe ausgebildet ist.

In einer ebenfalls konstruktiv einfachen und kompakten Ausführung der Erfindung weist das erste Schaltelement drei Schaltpositionen aufweist. Hierbei ist jeweils eine Schaltposition für einen Overdrive Modus, eine Neutralstellung und einen Direkttriebmodus vorgesehen. Insbesondere wird in einer linken Schaltposition des ersten Schaltelements in einen Overdrive Modus geschaltet, in einer mittleren Schaltposition in eine Neutralposition geschaltet, in der das erste Schaltelement geöffnet ist und in einer rechten Schaltposition in einen Direkttriebmodus geschaltet.

Die Erfindung wird im Folgenden anhand der in den Figuren gezeigten nicht einschränkenden Ausführungsbeispielen näher erläutert. Darin zeigen schematisch:
- Fig. 1: einen erfindungsgemäßen Antriebsstrang in einer ersten Ausführung der Erfindung; und
- Fig. 2: einen erfindungsgemäßen Antriebsstrang in einer zweiten Ausführung der Erfindung;
- Fig. 3: einen erfindungsgemäßen Antriebsstrang in einer dritten Ausführung der Erfindung;
- Fig. 4: einen erfindungsgemäßen Antriebsstrang in einer vierten Ausführung der Erfindung.

Funktionsgleiche Teile sind in den Ausführungsvarianten mit den gleichen Bezugszeichen versehen.

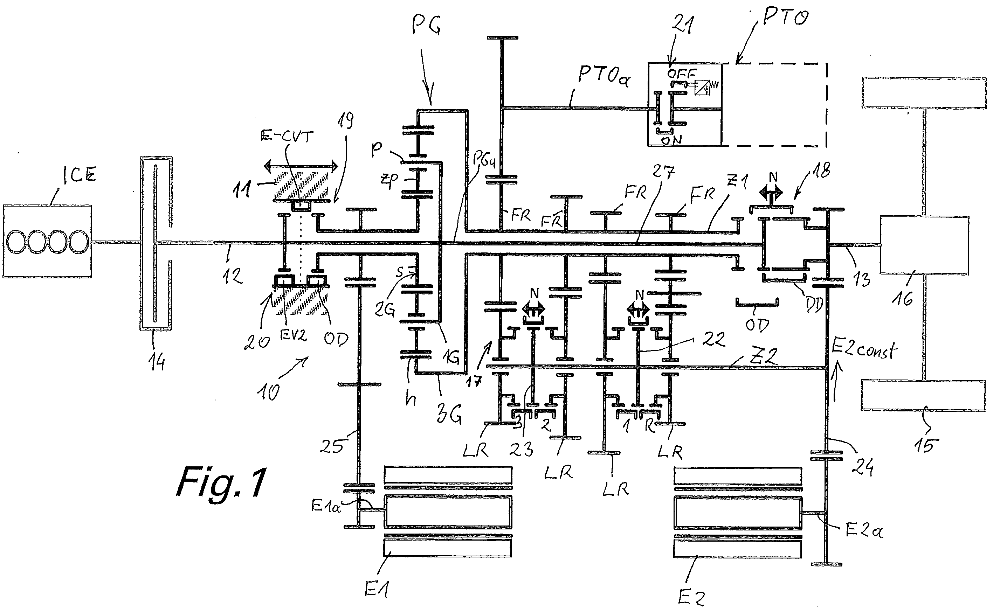

Die Fig. 1 bis Fig. 4 zeigen jeweils Antriebsstränge für Kraftfahrzeuge, beispielsweise Hybridfahrzeuge, mit Getriebeeinheiten 10.

Jede Getriebeeinheit 10 weist ein mit Bezugszeichen 11 nur angedeutetes Gehäuse, eine Getriebeeingangswelle 12 und zumindest eine Getriebeausgangswelle 13 auf. Die Getriebeeingangswelle 12 kann über eine Schaltkupplung 14 mit einer Brennkraftmaschine ICE verbunden werden. Die Getriebeausgangswelle 13 dient zum Antrieb von Antriebsrädern 15 des Kraftfahrzeuges, wobei mit Bezugszeichen 16 eine Hinterachse mit Übersetzung mit optionalem Differential bezeichnet ist. Die Getriebeeinheit 10 weist innerhalb des Gehäuses 11 ein als einfaches Minusgetriebe ausgebildetes Planetengetriebe PG auf. Das Planetengetriebe PG weist drei Getriebeelemente 1G, 2G, 3G auf, nämlich ein Sonnenrad s, ein Hohlrad h und einen Planetenträger p. Der Planetenträger p weist einen mit dem Sonnenrad s und dem Hohlrad h im Zahneingriff stehenden Planetenradsatz zp auf.

Die Getriebeeinheit 10 weist ein Stufengetriebe 17 mit einer ersten Zwischenwelle Z1 und einer zweiten Zwischenwelle Z2 sowie der Getriebeausgangswelle 13 auf, auf welchen Festräder FR und Losräder LR so angeordnet sind, dass sie mindestens drei feste Gänge 1, 2, 3, R mit unterschiedlichen Drehzahlübersetzungen - nämlich Vorwärtsgänge 1, 2, 3 und Rückwärtsgang R - bilden. Das Schalten der Gänge 1, 2, 3, R erfolgt über ein erstes Gangschaltelement 22 und über ein zweites Gangschaltelement 23. Die Gangschaltelemente 22, 23 sind beispielsweise als Klauenkupplungen ausgebildet, wobei der Schaltvorgang durch jeweils eine Schiebemuffe erfolgt.

Weiters weist die Getriebeeinheit 10 eine erste elektrische Maschine E1 und eine zweite elektrische Maschine E2 auf.

Die Brennkraftmaschine ICE ist mit einem ersten Getriebeelement 1G des Planetengetriebes PG drehverbunden oder drehverbindbar. Ein drittes Getriebeelement 3G des Planetengetriebes PG ist mit der ersten Zwischenwelle Z1 des Stufengetriebes 17 drehverbunden oder drehverbindbar.

Die Antriebswelle E2a der zweiten elektrischen Maschine E2 ist über eine feste Getriebestufe 24 mit der Getriebeausgangswelle 13 drehverbunden oder drehverbindbar.

Die Antriebswellen E1a und E2a sind koaxial oder parallel zueinander angeordnet.

Die Antriebswelle E1a der ersten elektrische Maschine E1 ist - eventuell über eine feste Getriebestufe 25 - mit einem zweiten Getriebeelement 2G des Planetengetriebes PG drehverbunden oder drehverbindbar. Die erste elektrische Maschine E1 kann wahlweise ebenso konzentrisch zur ersten Zwischenwelle z1 ausgeführt sein, wodurch die komplette Getriebestufe 25 entfallen kann.

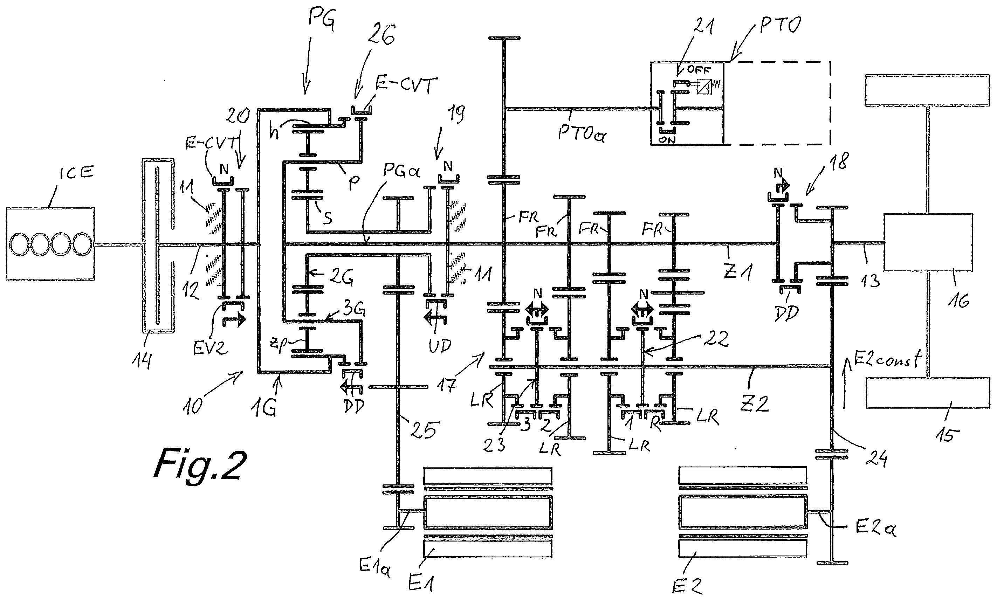

Die Brennkraftmaschine ICE kann über ein erstes Schaltelement 18 mit der Getriebeausgangswelle 13 drehverbunden werden. Auf diese Weise ist ein Direktantrieb der Getriebeausgangswelle 13 durch die Brennkraftmaschine ICE mit bestem Wirkungsgrad möglich. Im Direkttriebmodus DD befindet sich das erste Schaltelement 18 in den Fig. 1 bis Fig. 4 in der rechten Position. In Fig. 2 ist zur Verbindung des ersten Getriebeelementes 1G und des dritten Getriebeelementes 3G weiters ein Koppelschaltelement 26 vorgesehen, welches sich im Direkttriebmodus DD in der in Fig. 2 dargestellten linken Position befindet.

Das erste Schaltelement 18 weist in den Fig. 1, 3 und 4 drei Schaltpositionen auf, nämlich insbesondere eine linke Schaltposition, in der in den Overdrive Modus OD geschaltet wird, eine mittlere Neutralposition N, in der das erste Schaltelement 18 geöffnet ist, und eine rechte Schaltposition, in der in den Direkttriebmodus DD geschaltet wird.

Das zweite Getriebeelement 2G des Planetengetriebes PG ist über ein erstes Bremselement 19 mit dem Gehäuse 11 drehverbindbar, also feststellbar. Dies ermöglicht eine Übersetzung ins Schnelle (Overdrive OD) oder ins Langsame (Underdrive UD). Wie aus Fig. 1 ersichtlich ist, befindet sich im Overdrive Modus OD das erste Bremselement 19 in der in Fig. 1 eingezeichneten rechten Position und das erste Schaltelement 18 in der linken Position. Im in Fig. 2 eingezeichneten Underdrive Modus UD befindet sich das erste Bremselement 19 in der linken Position.

Das erste Getriebeelement 1G des Planetengetriebes PG ist durch ein zweites Bremselement 20 feststellbar. Das erste Getriebeelement 1G des Planetengetriebes PG1 ist in einem elektrischen Fahrmodus EV2, bei dem sowohl die erste als auch die zweite elektrische Maschine E2 jeweils separat oder zusammen aktiviert sein können, durch das zweite Bremselement 20 blockiert. Das zweite Bremselement 20 kann dabei in das erste Bremselement 19 integriert werden, wie in der Fig. 1 gezeigt ist.

Zumindest eine Zwischenwelle Z1, Z2 ist über eine Antriebswelle PTOa und ein drittes Schaltelement 21 mit einem Nebenabtrieb PTO drehverbindbar. In der linken Position ON ist der Nebenabtrieb PTO eingeschaltet, in der rechten Position OFF ausgeschaltet. Das erste Schaltelement 18 ist beispielsweise in der Neutralposition N, in welcher die Getriebeausgangswelle 13 von der Getriebeeingangswelle 12 (sowie von der Zwischenwelle Z1 in Fig. 1) getrennt ist. Der Nebenabtrieb PTO kann über die Brennkraftmaschine ICE oder rein elektrisch über die erste elektrische Maschine E1 betrieben werden. Bei rein elektrischem Antrieb über die erste elektrische Maschine E1 kann das zweite Bremselement 20 aktiviert und somit die Getriebeeingangswelle 12 festgehalten werden.

Der Antriebsstrang weist zumindest eine Notfallschaltung insbesondere für eine Vorwärtsfahrt und eine Rückwärtsfahrt - auf.

Mit dem Antriebsstrang lassen sich in allen Ausführungsvarianten folgende Betriebsmodi realisieren:
- E-CVT: Der Antrieb des Kraftfahrzeuges erfolgt in jedem Gangbereich stufenlos über die Brennkraftmaschine und wird durch die erste elektrische Maschine E1 und/oder die zweite elektrische Maschine E2 gesteuert, wobei alle Vorwärtsgänge 1, 2, 3 zur Verfügung stehen. Zusätzlich kann der Betriebspunkt (Drehzahl und Drehmoment) der Brennkraftmaschine ebenso in jedem Gangbereich variiert werden.
- EV2: Der Antrieb erfolgt nur über die elektrischen Maschinen E1, E2 bei festgehaltener Getriebeeingangswelle 12 und deaktivierter Brennkraftmaschine ICE. Wahlweise können hierbei nur E1 oder E2 separat oder E1 und E2 gemeinsam elektrisch antreiben. Die zweite elektrische Maschine E2 kann wahlweise ebenso konzentrisch zur Getriebeausgangswelle 13 ausgeführt sein, wodurch die komplette Getriebestufe 24 entfallen kann.
- E2 const: elektrischer Antriebsmodus mit konstantem Antrieb durch die zweite elektrische Maschine E2: Der Antrieb des Kraftfahrzeuges erfolgt nur durch die zweite elektrische Maschine E2 mit konstantem Übersetzungsverhältnis.
- OD: Konventioneller Antriebsmodus mit konstantem Antrieb durch die Brennkraftmaschine und einem Übersetzungsverhältnis ins schnelle von der Brennkraftmaschine zur Getriebeausgangswelle
- UD: Konventioneller Antriebsmodus mit konstantem Antrieb durch die Brennkraftmaschine und einem Übersetzungsverhältnis ins langsame von der Brennkraftmaschine zur Getriebeausgangswelle
- DD: Konventioneller Antriebsmodus mit konstantem Antrieb durch die Brennkraftmaschine und einem direktem Übersetzungsverhältnis von der Brennkraftmaschine zur Getriebeausgangswelle
- Notfallmodus ("Motor-Notbetrieb") für Vorwärtsfahrt und Rückwärtsfahrt.

Die erste Zwischenwelle Z1 ist achsgleich zur Drehachse PGa der Getriebeelemente 1G, 2G, 3G des Planetengetriebes PG ausgebildet.

In Fig. 1 wird das erste Getriebeelement 1G durch den Planetenträger p, das zweite Getriebeelement 2G durch das Sonnenrad s und das dritte Getriebeelement 3G des Planetengetriebes PG durch das Hohlrad h gebildet. Die erste Zwischenwelle Z1 ist als Hohlwelle ausgeführt, wobei innerhalb der ersten Zwischenwelle Z1 eine mit dem ersten Getriebeelement 1G drehverbundene oder drehverbindbare Direkttriebwelle 27 angeordnet ist, welche als Verlängerung der Getriebeeingangswelle 12 ausgebildet ist.

Es lassen sich drei E-CVT-Modi, drei EV2-Modi, ein Overdrive-Modus OD, ein E2 const-Modus, ein Direktantriebsmodus DD, drei Notfallmodi für Vorwärtsfahrt und ein Notfallmodus für Rückwärtsfahrt realisieren.

In Fig. 2 wird das erste Getriebeelement 1G durch das Hohlrad h, das zweite Getriebeelement 2G durch das Sonnenrad s und das dritte Getriebeelement 3G des Planetengetriebes PG durch den Planetenträger p gebildet.

Es lassen sich drei E-CVT-Modi, drei EV2-Modi, ein Underdrive-Modus UD, ein E2 const-Modus, ein Direktantriebsmodus DD, drei Notfallmodi für Vorwärtsfahrt und ein Notfallmodus für Rückwärtsfahrt realisieren.

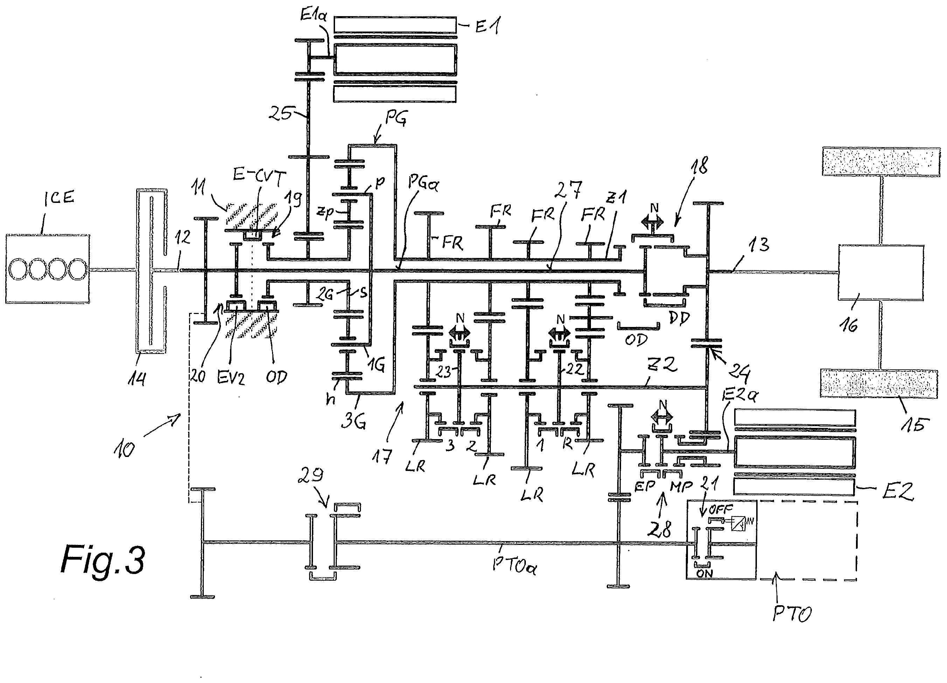

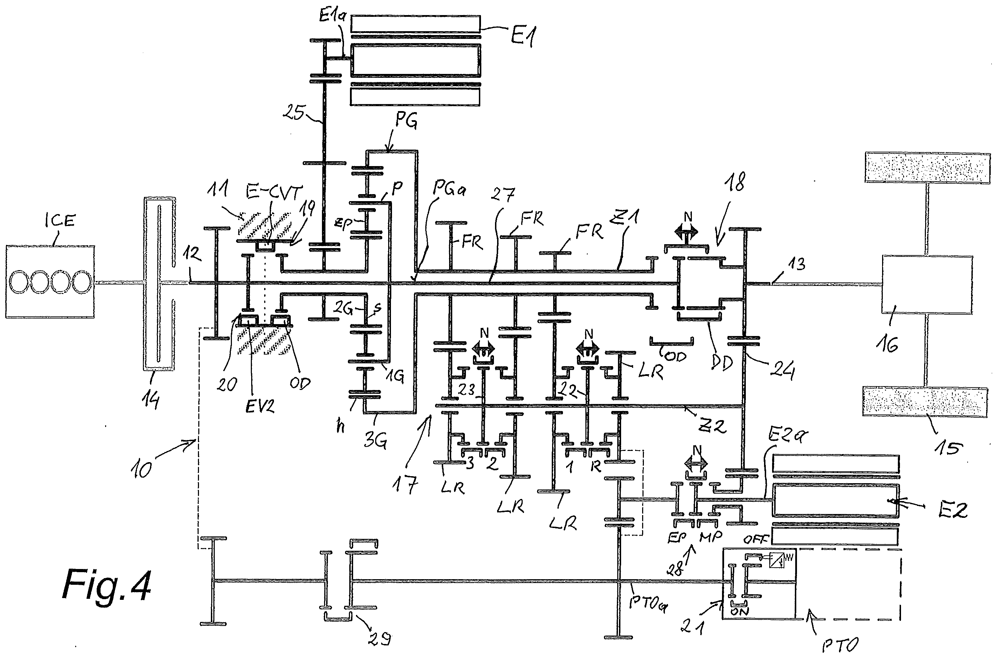

Ähnlich wie in Fig. 1 wird in Fig. 3 und Fig. 4 das erste Getriebeelement 1G jeweils ebenfalls durch den Planetenträger p, das zweite Getriebeelement 2G durch das Sonnenrad s und das dritte Getriebeelement 3G des Planetengetriebes PG durch das Hohlrad h gebildet. Die erste Zwischenwelle Z1 ist als Hohlwelle ausgeführt, wobei innerhalb der ersten Zwischenwelle Z1 eine mit dem ersten Getriebeelement 1G drehverbundene oder drehverbindbare Direkttriebwelle 27 angeordnet ist, welche als Verlängerung der Getriebeeingangswelle 12 ausgebildet ist.

Die Ausführungen der Fig. 3 und Fig. 4 unterscheiden sich von Fig. 1 durch folgende Aspekte:
- Die Antriebswelle E1a der ersten elektrischen Maschine E1 und die Antriebswelle E2a der zweiten elektrischen Maschine E2 sind nicht koaxial, sondern parallel zueinander - insbesondere beidseits der Getriebeeingangswelle 12, der Getriebeausgangswelle 13 und/oder der Direkttriebwelle 27 angeordnet. In einer nicht dargestellten Variation können die Antriebswellen E1a und E2a achsgleich angeordnet sein.
- Der Nebenantrieb PTO ist durch die elektrische Maschine E2 antreibbar, wobei im Antriebsweg zwischen der Antriebswelle E2a der zweiten elektrischen Maschine E2 und dem Nebenantrieb PTO ein zweites Schaltelement 28 angeordnet ist. Das zweite Schaltelement 28 weist drei Schaltstellungen auf, wobei in einer - in Fig. 3 und Fig. 4 linken - ersten Schaltstellung EP der Nebenantrieb PTO mit der Antriebswelle E2a der zweiten elektrischen Maschine E2 verbindbar und der Nebenantrieb PTO somit elektrisch durch die zweite elektrische Maschine E2 betreibbar ist. In einer in Fig. 3 und Fig. 4 rechten - zweiten - Schaltstellung MP oder in der Neutralstellung N des zweiten Schaltelementes 28 ist der Nebenantrieb PTO von der Antriebswelle E2a der elektrischen Maschine E2 getrennt und der Nebenantrieb PTO somit mechanisch durch die Brennkraftmaschine ICE antreibbar, wobei die Antriebswelle PTOa des Nebenantriebes PTO über ein drittes Schaltelement 29 mit der Getriebeeingangswelle 12 antriebsverbindbar ist. In der Neutralstellung N ist die Antriebswelle E2a der zweiten elektrischen Maschine E2 vom Nebenantrieb PTO bzw. von der Getriebeeingangswelle 12 und von der Getriebeausgangswelle 13 getrennt. In der rechten - zweiten - Schaltstellung MP des zweiten Schaltelementes 28 ist die elektrische Maschine E2 mit der getriebeausgangswelle 13 verbunden.

Die Ausführungen der Fig. 4 unterscheidet sich von Fig. 3 dadurch, dass das Losrad LR für den Rückwärtsgang R nicht über ein Umkehrzahnrad mit der ersten Zwischenwelle Z1 verbunden, sondern mit der Antriebswelle PTOa des Nebenantriebes PTO verbunden ist, welche über ein drittes Schaltelement 29 mit der Getriebeeingangswelle 12 antriebsverbindbar ist.

Ähnlich wie bei der Ausführung aus Fig. 1 lassen sich in Fig. 3 und Fig. 4 jeweils drei E-CVT-Modi, drei EV2-Modi, ein Overdrive-Modus OD, ein E2 const-Modus, ein Direktantriebsmodus DD, drei Notfallmodi für Vorwärtsfahrt und ein Notfallmodus für Rückwärtsfahrt realisieren.

In allen Ausführungsvarianten lässt sich der Antriebsstrang insbesondere im elektrischen Betrieb mit hohem Wirkungsgrad betreiben.

## Patentansprüche

1. Antriebsstrang für ein Kraftfahrzeug, mit
- einer Brennkraftmaschine (ICE),
- einer ersten elektrische Maschine (E1),
- einer zweiten elektrische Maschine (E2),
- einer Getriebeeinheit (10) mit
- einer mit der Brennkraftmaschine (ICE) drehverbindbaren oder drehverbundenen Getriebeeingangswelle (12),
- nur einem Planetengetriebe (PG) mit den Getriebeelementen (1G, 2G, 3G) Sonnenrad (s), Hohlrad (h) und Planetenträger (p), wobei der Planetenträger (p) Planetenräder (zp) trägt, die mit dem Sonnenrad (s) und dem Hohlrad (h) kämmen,
- einem Stufengetriebe (17) mit einer ersten Zwischenwelle (Z1), einer zweiten Zwischenwelle (Z2) und einer Getriebeausgangswelle (13),
- wobei auf den Zwischenwellen (Z1, Z2) des Stufengetriebes (17) und/oder der Getriebeausgangswelle (13) miteinander kämmende Losräder (LR) und Festräder (FR) derart angeordnet sind, dass sie mindestens zwei Gänge (1, 2, R), vorzugsweise mindestens drei Gänge (1, 2, 3, R) mit unterschiedlichen Drehzahlübersetzungen bilden,
- die Getriebeeingangswelle (12) mit einem ersten Getriebeelement (1G) des Planetengetriebes (PG) drehverbunden oder drehverbindbar ist,
- ein drittes Getriebeelement (3G) des Planetengetriebes (PG) mit der ersten Zwischenwelle (Z1) des Stufengetriebes (17), über die der zweite Gang (2) des Stufengetriebes (17) geschaltet wird, drehverbunden oder drehverbindbar ist,
- das zweite Getriebeelement (2G) des Planetengetriebes (PG) über ein erstes Bremselement (19) mit dem Gehäuse (11) feststellbar ist,
- die zweite elektrische Maschine (E2) mit der Getriebeausgangswelle (13) drehverbunden oder - vorzugsweise über ein schaltbares Getriebe - drehverbindbar ist,
**dadurch gekennzeichnet, dass**
- über die erste Zwischenwelle (Z1) des Stufengetriebes (17) auch der erste Gang (1), vorzugsweise auch der dritte Gang (3), des Stufengetriebes (17) geschaltet werden,
- die erste elektrische Maschine (E1) mit einem zweiten Getriebeelement (2G) des Planetengetriebes (PG) drehverbunden oder drehverbindbar ist,
- die Brennkraftmaschine (ICE) über ein erstes Schaltelement (18) direkt mit der Getriebeausgangswelle (13) drehverbindbar ist, und dass
- das erste Getriebeelement (1G) des Planetengetriebes (PG) durch ein zweites Bremselement (20) feststellbar ist, wobei in einem elektrischen Fahrmodus, bei dem die erste elektrische Maschine (E1) und/oder zweite elektrische Maschine (E2) aktiviert ist, das erste Getriebeelement (1G) des Planetengetriebes (PG) durch das zweite Bremselement (20) festgehalten ist.

2. Antriebsstrang nach Anspruch 1, **dadurch gekennzeichnet, dass** ein Nebenabtrieb (PTO) mit einer Zwischenwelle (Z1) drehverbunden oder drehverbindbar ist.

3. Antriebsstrang nach Anspruch 1 oder 2, **dadurch gekennzeichnet, dass** der Antriebsstrang zumindest eine Notfallschaltung - insbesondere für zumindest eine Vorwärtsfahrt und/oder zumindest eine Rückwärtsfahrt - aufweist.

4. Antriebsstrang nach einem der Ansprüche 1 bis 3, **dadurch gekennzeichnet, dass** die Getriebeeingangswelle (12) und die Getriebeausgangswelle (13) achsgleich zueinander angeordnet sind, wobei die Getriebeeingangswelle (12) und die Getriebeausgangswelle (13) an verschiedenen Seiten der Getriebeeinheit (10) angeordnet sind.

5. Antriebsstrang nach einem der Ansprüche 1 bis 4, **dadurch gekennzeichnet, dass** die erste Zwischenwelle (Z1) achsgleich zu einer Drehachse (PGa) der Getriebeelemente (1G, 2G, 3G) des Planetengetriebes (PG) angeordnet ist.

6. Antriebsstrang nach einem der Ansprüche 1 bis 5, **dadurch gekennzeichnet, dass** die erste Zwischenwelle (Z1) als Hohlwelle ausgeführt ist, wobei, innerhalb der ersten Zwischenwelle (Z1) ein mit dem ersten Getriebeelement (1G) drehverbundene oder drehverbindbare Direkttriebwelle (27) angeordnet ist.

7. Antriebsstrang nach einem der Ansprüche 1 bis 6, **dadurch gekennzeichnet, dass** das erste Getriebeelemente (1G) des Planetengetriebes (PG) und das dritte Getriebeelemente (3G) miteinander über ein Koppelschaltelement (26) drehfest verbindbar sind.

8. Antriebsstrang nach einem der Ansprüche 1 bis 7, **dadurch gekennzeichnet, dass** das Planetengetriebe (PG) als einfaches Minusgetriebe ausgebildet ist.

9. Antriebsstrang nach einem der Ansprüche 1 bis 8, **dadurch gekennzeichnet, dass** das erste Schaltelement (18) drei Schaltpositionen aufweist, wobei insbesondere in einer linken Schaltposition des ersten Schaltelements (18) in einen Overdrive Modus (OD) geschaltet wird, in einer mittleren Neutralposition N das erste Schaltelement (18) geöffnet ist und in einer rechten Schaltposition in einen Direkttriebmodus (DD) geschaltet wird.

## Claims

1. A powertrain for a motor vehicle, comprising
- an internal combustion engine (ICE),
- a first electric machine (E1),
- a second electric machine (E2),
- a transmission unit (10), having
- a transmission input shaft (12), rotationally connectible or rotationally connected to the internal combustion engine (ICE),
- only one planetary transmission (PG) with the transmission elements (1G, 2G, 3G) of sun gear (s), ring gear (h) and planet carrier (p), wherein the planet carrier (p) supports planet gears (zp) meshing with the sun gear (s) and the ring gear (h),
- a stepped transmission (17) with a first intermediate shaft (Z1), a second intermediate shaft (Z2) and a transmission output shaft (13),
- wherein mutually meshing loose gears (LR) and fixed gears (FR) are arranged on the intermediate shafts (Z1, Z2) of the stepped transmission (17) and/or the transmission output shaft (13) in such a way that they form at least two gears (1, 2, R), preferably at least three gears (1, 2, 3, R), with different rotational speed transmission ratios,
- the transmission input shaft (12) is rotationally connected or rotationally connectible to a first transmission element (1G) of the planetary transmission (PG),
- a third transmission element (3G) of the planetary transmission (PG) is rotationally connected or rotationally connectible to the first intermediate shaft (Z1) of the stepped transmission (17) by which the second gear (2) of the stepped transmission (17) is shifted,
- the second transmission element (2G) of the planetary transmission (PG) is securable to the housing (11) via a first brake element (19),
- the second electric machine (E2) is rotationally connected or rotationally connectible - preferably via a shiftable transmission - to the transmission output shaft (13), and
**characterised in that**
- also the first gear (1), and preferably also the third gear (3), of the stepped transmission (17) are shifted via the first intermediate shaft (Z1) of the stepped transmission (17),
- the first electric machine (E1) is rotationally connected or rotationally connectible to a second transmission element (2G) of the planetary transmission (PG)
- the internal combustion engine (ICE) is rotationally connectible directly to the transmission output shaft (13) via a first shift element (18),
- the first transmission element (1G) of the planetary transmission (PG) is securable by means of a second brake element (20), wherein the first transmission element (1G) of the planetary transmission (PG) is secured by the second brake element (20) in an electrical driving mode, in which the first electric machine (E1) and/or the second electric machine (E2) is activated.

2. The powertrain according to claim 1, **characterised in that** a power take-off (PTO) is rotationally connected or rotationally connectible to an intermediate shaft (Z1).

3. The powertrain according to claim 1 or 2, **characterised in that** the powertrain has at least one emergency circuit, in particular for at least forward travel and/or at least reverse travel.

4. The powertrain according to any one of claims 1 to 3, **characterised in that** the transmission input shaft (12) and the transmission output shaft (13) are arranged on the same axis, wherein the transmission input shaft (12) and the transmission output shaft (13) are arranged on different sides of the transmission unit (10).

5. The powertrain according to any one of claims 1 to 4, **characterised in that** the first intermediate shaft (Z1) is arranged on the same axis as an axis of rotation (PGa) of the transmission elements (1G, 2G, 3G) of the planetary transmission (PG).

6. The powertrain according to any one of claims 1 to 5, **characterised in that** the first intermediate shaft (Z1) is designed as a hollow shaft, wherein a direct-drive shaft (27) rotationally connected or rotationally connectible to the first transmission element (1G) is arranged inside the first intermediate shaft (Z1).

7. The powertrain according to any one of claims 1 to 6, **characterised in that** the first transmission element (1G) of the planetary transmission (PG) and the third transmission element (3G) are connectible to one another for co-rotation by means of a coupling shift element (26).

8. The powertrain according to any one of claims 1 to 7, **characterised in that** the planetary transmission (PG) is implemented as a simple minus gear set.

9. The powertrain according to any one of claims 1 to 8, **characterised in that** the first shift element (18) has three shift positions, wherein specifically a left-hand shift position of the first shift element (18) is used to shift to an overdrive mode (OD), in a central neutral position N the first shift element (18) is open, and a right-hand shift position is used to shift to a direct-drive mode (DD).

## Revendications

1. Groupe motopropulseur pour un véhicule automobile comprenant
- un moteur (ICE) à combustion interne,
- un premier moteur (E1) électrique,
- un deuxième moteur (E2) électrique,
- une unité (10) de transmission comprenant
- un arbre (12) d'entrée de transmission assemblé à rotation au moteur (ICE) à combustion interne ou pouvant l'être,
- seulement un engrenage (PG) planétaire ayant les éléments (1G, 2G, 3G) d'engrenage, roue (s) solaire, roue (h) à denture intérieure et cage (p) de transmission planétaire, dans lequel la cage (p) de transmission planétaire porte des roues (zp) planétaires, qui engrènent avec la roue (s) solaire et avec la roue (h) à denture intérieure,
- un variateur (17) de vitesse ayant un premier arbre (Z1) intermédiaire, un deuxième arbre (Z2) intermédiaire et un arbre (13) de sortie du variateur,
- dans lequel, sur les arbres (Z1, Z2) intermédiaires du variateur (17) de vitesse et/ou de l'arbre (13) de sortie du variateur sont montées des roues (LR) folles et des roues (FR) fixes engrenant entre elles de manière à former au moins deux rapports (1, 2, R), de préférence, au moins trois rapports (1, 2, 3, R) ayant des multiplications différentes de vitesse de rotation,
- l'arbre (12) de sortie du variateur de vitesse est assemblé à rotation à un premier élément (1G) de l'engrenage (PG) planétaire ou peut l'être,
- un troisième élément (3G) de transmission de l'engrenage (PG) planétaire est assemblé à rotation au premier arbre (21) intermédiaire du variateur (17) de vitesse, par lequel le deuxième rapport (2) du variateur (17) de vitesse est passé ou peut l'être,
- le deuxième élément (2G) de transmission de l'engrenage (PG) planétaire peut être fixé au carter (11) par un premier élément (19) de freinage,
- le deuxième moteur (E2) électrique est relié à rotation à l'arbre (13) de sortie du variateur de vitesse ou - de préférence par une transmission manœuvrable - peut l'être,
**caractérisé en ce que**
- par le premier arbre (Z1) intermédiaire du variateur (17) de vitesse, le premier rapport (1), de préférence aussi le troisième rapport (3), du variateur (17) de vitesse peuvent être passés,
- le premier moteur (E1) électrique est assemblé à rotation à un deuxième élément (2G) de transmission de l'engrenage (PG) planétaire ou peut l'être,
- le moteur (ICE) à combustion interne est assemblé à rotation à l'arbre (13) de sortie du variateur de vitesse directement par un premier élément (18) de commutation, et **en ce que**
- le premier élément (1G) de transmission de l'engrenage (PG) planétaire peut être fixé par un deuxième élément (20) de freinage, dans lequel dans un mode de circulation électrique, dans lequel le premier moteur (E1) et/ou le deuxième moteur (E2) électrique est activé, le premier élément (1G) de transmission de l'engrenage (PG) planétaire est maintenu fixe, par le deuxième élément (20) de freinage.

2. Groupe motopropulseur suivant la revendication 1, **caractérisé en ce qu'**une sortie (PTO) auxiliaire est assemblée à rotation à un arbre (21) intermédiaire ou peut l'être.

3. Groupe motopropulseur suivant la revendication 1 ou 2, **caractérisé en ce que** le groupe motopropulseur a une commande d'urgence - en particulier pour au moins une marche avant et/ou au moins une marche arrière.

4. Groupe motopropulseur suivant l'une des revendications 1 à 3, **caractérisé en ce que** l'arbre (12) d'entrée de transmission et l'arbre (13) de sortie du variateur de vitesse sont disposés en ayant le même axe l'un par rapport à l'autre, dans lequel l'arbre (12) d'entrée de transmission et l'arbre (13) de sortie du variateur de vitesse sont disposés sur des côtés différents de l'unité (10) de transmission.

5. Groupe motopropulseur suivant l'une des revendications 1 à 4, **caractérisé en ce que** le premier arbre (21) intermédiaire est disposé en ayant le même axe qu'un axe (PGa) de rotation des éléments (1G, 2G, 3G) de transmission de l'engrenage (PG) planétaire.

6. Groupe motopropulseur suivant l'une des revendications 1 à 5, **caractérisé en ce que** le premier arbre (21) intermédiaire est réalisé en arbre creux, dans lequel, à l'intérieur du premier arbre (Z1) intermédiaire, est disposé un arbre (27) de propulsion directe, assemblé à rotation au premier élément (1G) de transmission ou pouvant l'être.

7. Groupe motopropulseur suivant l'une des revendications 1 à 6, **caractérisé en ce que** le premier élément (1G) de transmission d'engrenage (PG) planétaire et le troisième élément (3G) de transmission peuvent être assemblés ensemble d'une manière solidaire en rotation par un élément (26) d'accouplement.

8. Groupe motopropulseur suivant l'une des revendications 1 à 7, **caractérisé en ce que** l'engrenage (PG) planétaire est constitué sous la forme d'un simple engrenage minus.

9. Groupe motopropulseur suivant l'une des revendications 1 à 8, **caractérisé en ce que** le premier élément (18) de commutation a trois positions de commutation, dans lequel en particulier, dans la position de commutation à gauche du premier élément (18) de commutation, on passe dans un mode (OD) d'overdrive, dans une position N neutre moyenne, le premier élément (18) de commutation est ouvert et, dans une position de commutation à droite, on passe dans un mode (DD) de propulsion directe.
